# EUROPEAN PATENT APPLICATION

(11) **EP 2 392 484 A1**
(43) Date of publication of application: **07.12.2011**
(21) Application number: 10382162.5
(22) Date of filing: 04.06.2010
(51) Int. Cl.: B60J 3/02

(54) **Procedure for mounting interior parts marked with informative labels in vehicles**

(71) Applicant: Grupo Antolin-Ingenieria, S.A., 09007 Burgos (ES)
(72) Inventor: Bernard, Vincent, 88650, ANOULD, France (FR); Valdenaire, Olivier, 88200, DOMMARTAIN LES REMIREMONT (FR)
(74) Representative: Capitan Garcia, Maria Nuria

(57) **Abstract**

The present invention relates to a procedure for mounting interior parts (1) with informative labels (2), simplified by reducing the number of different references of some of the components present in said procedure, specifically such that the mounting procedure is not conditioned by the different versions (2.3) of informative labels resulting from their customisation for adapting the content of the text and the form of said labels from one vehicle to another, depending for example on factors related to the geographical area of destination of the automobile fitted with said interior parts, such as the language or the legislation regarding safety of said geographical area of destination.

## Description

### OBJECT OF THE INVENTION

The present invention relates to a procedure for mounting interior parts in vehicles, wherein said parts are marked with certain information, such as that related to the use of safety devices as airbags, and more specifically with labels that provide a support for this information and that are integrally joined to the interior parts.

The difficulty inherent to this mounting procedure is considerably increased when this information can vary from one vehicle to another in the same assembly line, for example, depending on language of the destination country of the vehicle in which this information must be expressed; this typically requires having different types of label or different references and the corresponding management thereof.

The object of the invention is to simplify the procedure for mounting interior parts marked with informative labels in vehicles, such as that regarding the correct use of an airbag, by reducing the number of different references for labels present in this mounting procedure, such that the mounting procedure is not conditioned by the diversity of labels resulting from the customisation thereof when it is necessary to adapt the text of the information from one vehicle to another, for example depending on the geographical destination (country, region etc.) of the vehicle fitted with these interior parts, due to the language and/or legislation on safety of said geographical area of destination.

The invention is characterised by a procedure for mounting interior parts on vehicles that uses standardised labels independently of the information to be printed on them, for example regarding safety devices such as airbags, wherein the personalised information, the text of which is adapted as a function of the geographical area of destination of the vehicle, for example, is marked either after said support label is attached to the interior part or at a stage immediately prior to the attachment stage of said label on the interior part, thereby avoiding the need for managing and storing a plurality of labels.

### BACKGROUND OF THE INVENTION

It is increasingly common to require identifying airbag-type safety devices located inside automobiles so that users are informed on the risks of the deployment of said airbag in case of a collision, for example, when not used properly; for example, when attaching a child seat in the front seat.

Therefore the need exists to identify the presence of these devices and the risks entailed in their improper use, such as by using a label with the necessary information on this type of devices.

This label is normally attached to parts in the automobile interior, such as a sun visor.

Depending on the geographical area of destination of the vehicle, the language or even the legislation regarding the safety measures of the vehicle can change. Therefore, there is a need to mark adequately said interior parts according to the geographical area of destination of the vehicle, adapting the text of said labels individually for each vehicle according to the geographical area of destination.

This implies a significant added complication due to the need to manage interior parts with different characteristics, which are referred to as references, generating a plurality of variants according to such characteristics as the type of finish, colour, functionality, etc.

As the diversity generated for each part according to the type of finish, colour, functionality etc. is inevitable, the task is therefore to simplify the management of this diversity and specifically the diversity directly related to the informative labels.

The state of the art includes procedures for managing interior parts with informative labels, such as sun visors, with information on airbag-type protection devices consisting of the following stages:
- Manufacturing a sun visor;
- Manufacturing a customised informative label in which the text of the label is adapted to the geographical area of destination in which the vehicle will be marketed (for example language and applicable legislation);
- Attaching said customised label to the sun visor;
- Supplying said sun visor marked with a customised label to the vehicle manufacturer;
- Assembling the sun visor on said vehicle.

This procedure has the following drawbacks:
- The variety of languages and legislations according to the geographical area of destination of the vehicle requires manufacturing as many informative labels as there are geographical areas of destination -this is, customised labels- which, together with the diversity of existing sun visors according to the vehicle model or equipment implies managing a high number of references by the supplier of these parts. This results in a significant increase in complexity of the part management system and the corresponding labelling, with the ensuing increase in cost and risk of failure in the supply of the correct reference.

In an attempt to reduce the number of references that must be handled to manage this type of parts, a solution of the state of the art involves grouping the information of the labels including several languages, thereby reducing the number of labels required.

In this line in which an attempt is made to solve this drawback by grouping the information in a single label with several languages, solutions are known in which the information has a fixed disposition, such as with a label attached to the surface of the sun visor showing the information in several languages.

A solution of this type is only useful in cases in which a limited number of alternatives is used regarding the information to give, and due to the limited space available it reduces the clarity with which said information is presented.

Another solution known in this line, based on document FR2936744, relates to the use of a device that allows selecting the language of the label with a mobile support element housed inside a sun visor containing the different versions of the information to be shown distributed in different areas on its surface, of which only a fraction is visible equivalent to the surface occupied by one area, so that it can be moved to select the version of the information among all those available for display.

However, this latter solution is far from solving the problem in an efficient manner, among other reasons because the diversity of languages and legislations would require making a large support element, so that a single reference thereof could include all variants of the information according to the language and/or the applicable legislation of each geographical area.

On another hand, solutions are known such as that of document EP1571025A1 in which the information to display is associated with a specific component, initially independent of the sun visor in which it will be mounted subsequently, thereby making independent the management of the diversity of sun visors from that of the different possible information versions.

The selection of the support with the proper information can thus be transferred to the vehicle assembly line, avoiding the increase in complexity of the normal manufacturing and supply process for the vehicle sun visor.

This avoids the increase in cost and possible failures in the supply of sun visors to the assembly line resulting from a high number of references being handled during the procedure related to the manufacture, labelling and supply of sun visors provided with labels bearing customised information.

However, this procedure only simplifies the problem in part, transferring the management of labels with personalised information to the vehicle assembly line, where it will be necessary to manage (reception, storage, mounting) the different customised informative labels according to the language and/or legislation of the geographical area of destination of the vehicles fitted with said interior parts.

### DESCRIPTION OF THE INTENTION

In view of the above, it is considered necessary to solve the drawbacks of the state of the art for a procedure for mounting interior parts marked with informative labels in vehicles, simplifying it by reducing the number of references present in said mounting procedure so that it is not conditioned by the diversity of possible versions of the text to display needed to adapt said information from one vehicle to another, for example, according to the language and/or safety legislation of the geographical area of destination of the automobile fitted with said interior parts.

Thus, the present invention relates to a procedure for mounting interior parts marked with informative labels in vehicles, this procedure comprising the following stages:
a) Supplying an interior vehicle part;
b) Supplying a standardised informative label that comprises a support means;
c) Attaching said informative label to the interior part of the vehicle;
d) Marking specific information on said informative label to obtain a customised informative label;
e) Mounting said interior part (1) marked with the informative label in the automobile;
so that the marking of the customised information of stage d) is performed either once said informative label has been attached to the interior part, stage c), or in a stage immediately prior to stage c) in which the informative label is attached to the interior part of the automobile.

The stages listed above, which constitute the procedure for mounting interior parts marked with informative labels on vehicles, are not necessarily executed in a consecutive manner.

To limit the scope of the invention, "a stage immediately prior" is understood as executing the marking stage of the label without any idle time between the stage of marking the label and the stage of attaching said label to the interior part, so that it is not necessary to store and later manage said labels until they are attached to the interior part.

The term "customised information" normally refers to the information that makes the standard label become a customised label, which can therefore vary from one vehicle to another in the same assembly line; for example, information with text that is not adapted to the geographical area of destination of the vehicles bearing the interior parts marked with said labels, conditioning for example the language of the information displayed and/or its content and format to the safety legislation in force in said geographical area.

The main advantage of the procedure of the invention is the considerable simplification achieved by reducing the number of references that must be managed in the procedure for mounting an interior part marked with an informative label.

Specifically, the reduction in the number of references regards the elimination of customised informative labels marked with customised information with text adapted, for example, to the geographical area of destination of the vehicle fitted with said interior parts in the stages of the procedure that require added management and storage of said customised informative labels.

This avoids the use of different versions of customised informative labels intended for a specific geographical area, using only standardised labels as a support for said information, thereby allowing the indifferent use of any label regardless of geographical area, eliminating the need to manage different informative labels and preventing potential failures in the supply of the interior part.

### DESCRIPTION OF THE DRAWINGS

The present descriptive memory is completed with a set of figures that illustrate the preferred embodiment of the invention and in no way limit it.

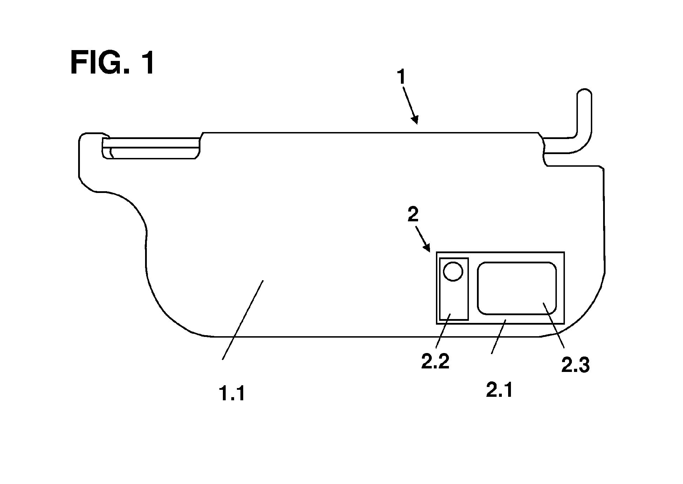

Figure 1 represents a schematic perspective view of an interior automobile part, specifically a sun visor marked with a customised informative label.

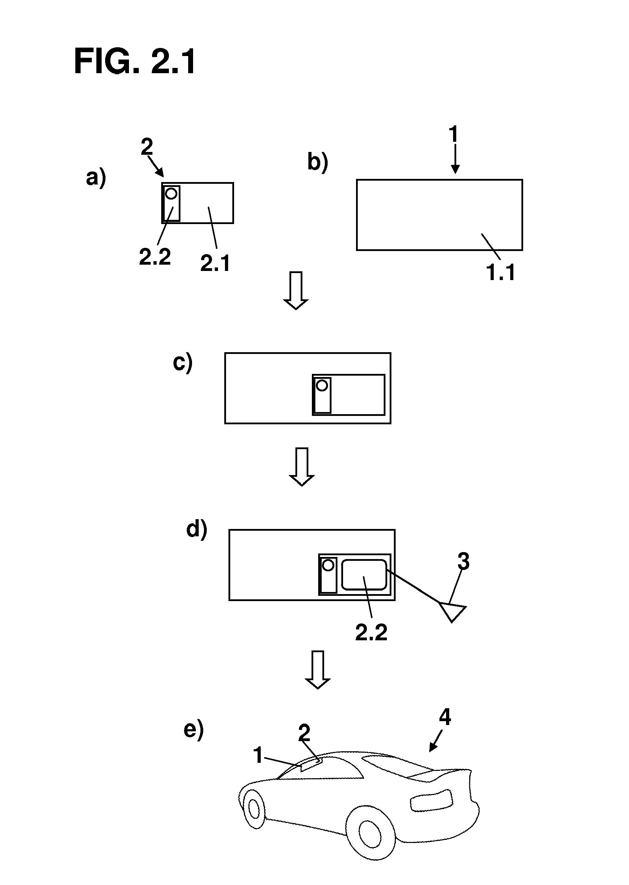

Figure 2.1 represents a schematic view of the mounting procedure in a vehicle of interior parts, specifically a sun visor, marked with information regarding the airbag according to a first variant of the invention in which the specific information on the label is marked in a stage after the stage in which said label is attached to the interior part.

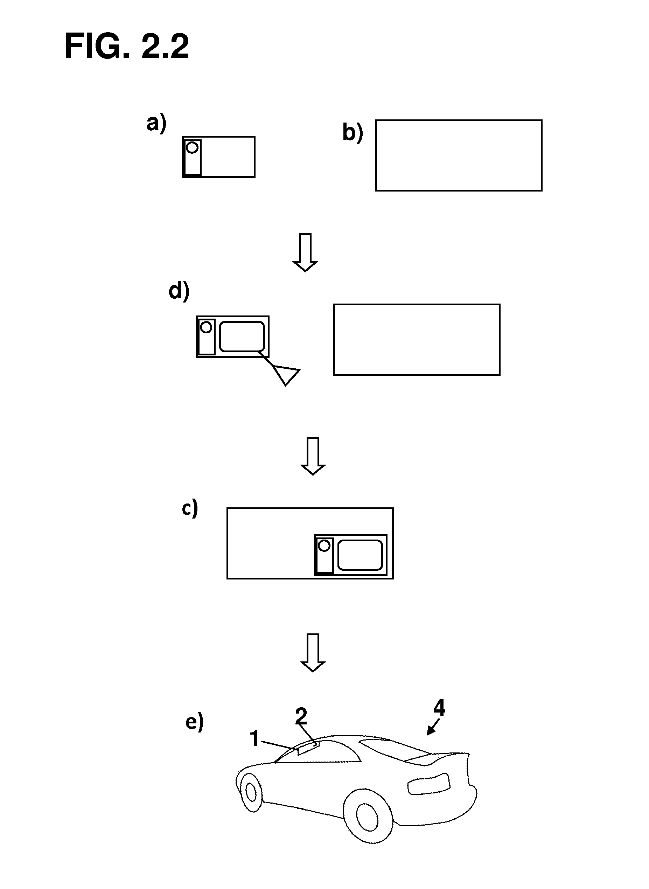

Figure 2.2 represents a schematic view of the mounting procedure in a vehicle of interior parts, specifically a sun visor, marked with information regarding the airbag according to a second variant of the invention in which the specific information on the label is marked in a stage immediately prior to the stage in which said label is attached to the interior part.

### PREFERRED EMBODIMENT OF THE INVENTION

Figure 1 shows an interior part (1) of an automobile (4), in this specific case a sun visor, marked with a customised informative label (2) wherein the specific information refers to the use and operation of an airbag safety device.

The customised informative label (2) comprises a support means (2.1) that can consist in, for example: a plastic sheet; standardised information (2.2), this is, information with a text common to all versions that does not depend on factors such as the geographical area of destination of the vehicle (4) fitted with the sun visor (1); and, finally, customised information (2.3), this is, information with text that can vary from one vehicle to another in the same assembly line, depending for example on the geographical area of destination of the vehicle (4) fitted with the sun visor (1), in either the language in which it must be expressed or in the format of this text according to the safety legislation in force in the geographical area of destination of the vehicle.

After describing the characteristics of the interior part (1) marked with a customised informative label (2), a description is made of the mounting procedure thereof as well as of some possible variants of this procedure that will give rise to the preferred embodiments of the invention.

To do so, a list is first provided the basic stages that form part of the procedure, which do not necessarily take place in a consecutive manner.

Procedure for mounting interior parts marked with informative labels in vehicles, this procedure comprising the following stages:
a) Supplying an interior vehicle part (1);
b) Supplying a standardised informative label (2) which comprises a support means (2.1);
c) Attaching said informative label (2) to the interior part (1) of the vehicle (4);
d) Marking on said informative label (2) the specific information (2.3);
e) Mounting in the automobile (4) said interior part (1) marked with the informative label (2);
such that the marking of the customised information (2.3) is performed either once said informative label (2) has been attached to the interior part (1), stage c), or in a stage immediately prior to stage c) in which the informative label (2) is attached to the interior part (1) of the automobile.

As can be seen in the schematic representation of a variant of the procedure of figure 2.1, firstly an interior part (1) is supplied meant to identify information regarding an airbag, for example, stage a).

These parts are normally easily visible by the user of the vehicle (4) to ensure that this information reaches the user in order to prevent harm resulting from an improper use of the airbag. For example, the parts normally marked can be sun visors, dashboards, etc.

Secondly, an informative label is supplied (2) marked with customised information (2.3) regarding the airbag.

In stage b) of the procedure the informative label (2) comprises a support means (2.1) and optionally standardised information (2.2) valid for any interior part (2), regardless of the geographical area of destination of the vehicle (4) fitted with said interior part (1), in this case a sun visor.

Said standardised information (2.2) may consist of symbols indicating warning or danger, style lines defining the label design, etc.

In this way, a single version of informative label (2) is managed until it must be marked with the customised information (2.3), where the content and language of the text of said information are adapted to the requirements of the geographical area of destination of the vehicle.

Said stage b) can be performed before, after or during the execution of stage a).

Then, the informative label (2) is attached to the interior part (1), stage c), specifically on the surface (1.1) of said interior part (1).

In order to attach this informative label (2) to the interior part (1) it is normally necessary to use irreversible attachment methods, this is, attachment methods that prevent a subsequent removal and attachment of the informative label (2) on the interior part (1) using the same attachment means.

Therefore, known attachment means can be used to carry out this attachment such as heat transfer, cementing, etc.

After attaching the informative label (2) to the interior part (1), the label (2) is marked, stage d), with specific customised information (2.3) adapted to the geographical area of destination of the vehicle (4) fitted with the interior part (1).

A preferred way to carry out the process of marking the informative label (2) consists of using a laser marking installation (3) to mark the customised information (2.3) according to the language and/or legislation of the geographical area of destination of the vehicle (4).

Said laser marking installation (3) has control means that can store the different possible versions of the customised information (2.3) and assign them to each model in an appropriate manner.

The support means (2.1) that make up the informative label (2) can be specifically prepared to allow marking it with a laser beam, such as by having a special ink that can react to a laser beam changing its colour, thereby configuring the text that will determine the customised information (2.3) on said informative label (2).

Another variant of the invention involves the use of two or more layers of ink of different colour on the support means (2.1), such that the increase in temperature produced by the laser beam eliminates portions of at least one of the ink layers, exposing areas of at least one other ink layer as needed to configure the design of the informative label (2) with the desired text.

In any case, the parameters of the control means are adjusted to prevent damaging the interior part (1) or the informative label (2) on which the customised information (2.3) is marked.

The marking stage d) can be performed either on the interior part (1) separate from other elements or on the part (1) once it has been preassembled on a set of components, for example a roof module, such as in the case that the interior part (1) is a sun visor, or on the vehicle (4) itself, this is, when the interior part (1) is mounted inside the vehicle (4), stage e) of the procedure.

Once the marking stage carried out in stage d) of the procedure has finished, the marking of the interior part (1) with an informative label (2) will be complete.

If the marking stage d) is performed with the part (1) mounted on the vehicle (4), the mounting procedure on the vehicle of an internal part marked with an informative label will be complete.

In the cases in which the marking is performed before the interior part (1) is mounted on the vehicle, to complete the procedure it is only necessary to mount the interior part (1) on the vehicle (4), either individually or as part of a modular group of components, which constitutes stage e) of the mounting procedure.

In a variant of the process represented schematically in figure 2.2, the stage c) for attaching the informative label (2) on the interior part (1) can be performed immediately after the stage d) for marking said interior part (1) such that once said informative label (2) is marked with the customised information (2.3), it is attached, stage c), to the interior part (1).

## Claims

1. Procedure for mounting interior parts marked with informative labels in vehicles, wherein this procedure comprises the following stages:
a) Supplying an interior part (1) of the automobile;
b) Supplying an informative label (2) which comprises a support means (2.1);
c) Attaching said informative label (2) to the interior part (1) of the automobile;
d) Marking on said informative label (2) the specific information (2.3);
e) Mounting in the automobile (4) said interior part (1) marked with the informative label (2);
such that the marking of the customised information (2.3) is performed either once said informative label (2) has been attached to the interior part (1), stage c), or in a stage immediately prior to stage c) in which the informative label (2) is attached to the interior part (1).

2. Procedure for mounting interior parts marked with informative labels in vehicles according to claim 1, **characterised in that** stages a) and b) can be executed simultaneously, stage a) before stage b) or stage a) after stage b).

3. Procedure for mounting interior parts marked with informative labels in vehicles according to claim 1, **characterised in that** the informative label (2) of stage b) is provided with prior standardised information (2.2).

4. Procedure for mounting interior parts marked with informative labels in vehicles according to claim 3, **characterised in that** the prior standardised information (2.2) of the informative label includes data independent of the country or region of destination, such as symbols, formats and/or style lines.

5. Procedure for mounting interior parts marked with informative labels in vehicles according to claim 1, **characterised in that** stage c) is performed before stage d) is performed.

6. Procedure for mounting interior parts marked with informative labels in vehicles according to claim 1, **characterised in that** stage c) is performed after stage d) is performed.

7. Procedure for mounting interior parts marked with informative labels in vehicles according to claim 1, **characterised in that** stage c) in which the informative label (2) is attached is executed using irreversible attachment means.

8. Procedure for mounting interior parts marked with informative labels in vehicles according to claim 1, **characterised in that** the customised information (2.3) depends on factors related to the geographical area of destination of the vehicle, such as the language and/or the safety legislation in force.

9. Procedure for mounting interior parts marked with informative labels in vehicles according to claim 5, **characterised in that** stage d) can be performed in any/some of the three:
a. On the interior part (1) separated from any other element of the automobile;
b. On the interior part (1) already associated with a set of components of the vehicle interior;
c. On the interior part of the automobile already mounted in the vehicle, after stage e).

10. Procedure for mounting interior parts marked with informative labels in vehicles according to claim 1, **characterised in that** stage d) for marking is performed with a laser marking installation (3).
